# EUROPÄISCHE PATENTSCHRIFT

(11) **EP 0 721 953 B1**
(45) Veröffentlichungstag und Bekanntmachung des Hinweises auf die Patenterteilung: **03.04.2002**
(21) Anmeldenummer: 95120577.2
(22) Anmeldetag: 27.12.1995
(51) Int. Cl.: C07F 15/00

(54) **Heterocyclische Carbene enthaltende Metallkomplexverbindungen**
Metal complexes containing heterocyclic carbenes
Complexes métalliques contenant des carbènes hétérocycliques

(30) Priorität: 29.12.1994 DE 4447066
(43) Veröffentlichungstag der Anmeldung: 17.07.1996
(73) Patentinhaber: Celanese Chemicals Europe GmbH, 60439 Frankfurt am Main (DE)
(72) Erfinder: Herrmann, Wolfgang A., Prof. Dr., D-85354 Freising (DE); Elison, Martina, D-80798 München (DE); Fischer, Jakob, D-85414 Kirchdorf (DE); Köcher, Christian, D-80805 München (DE); Öfele, Karl, Dr., D-82178 Puchheim (DE)

(56) Entgegenhaltungen:
- JOURNAL OF ORGANOMETALLIC CHEMISTRY, Bd. 481, 1994, Seiten 89-95, XP002001053 CETINKAYA, E. ET AL.: "CARBENE COMPLEXES"
- JOURNAL OF THE AMERICAN CHEMICAL SOCIETY, Bd. 116, 1994, Seiten 4391-4394, XP002001055 ARDUENGO, A.J. III., ET AL.: "LOW-COORDINATE CARBENE COMPLEXES OF NICKEL(0) AND PLATINUM(0)"
- ZEITSCHRIFT FUR NATURFORSCHUNG, B., Bd. 47B, 1992, Seiten 79-89, XP002001056 FEHLHAMMER, W.P. WT AL.: "HOMOLEPTISCHE CARBENKOMPLEXE"
- ZHURNAL OBSHCHEI KHIMII, Bd. 58, Nr. 4, 1988, Seiten 738-741, XP002001057 DEMIDOV, V.N. ET AL.: "THERMAL DEHYDROCHLORINATION OF 1,3-DIMETHYLBENZIMIDAZOLIUM TETRACHLOROPLATINATE(II) AND HEXACHLOROPLATINATE(IV)"
- TETRAHEDRON LETTERS, Nr. 18, 1978, Seiten 1535-1538, XP002001058 ITO, Y. ET AL.: "A NEW PREPARATION OF IMIDAZOLIDINYLIDENE PALLADIUM(II) COMPLEXES"
- JOURNAL OF ORGANOMETALLIC CHEMISTRY, Bd. 484, 1994, Seiten 19-26, XP002001059 ALONSO, M.T. ET AL.: "CYCLOMETALLATED COMPOUNDS OF PD(II) WITH PYRAZOLE DERIVATIVES."
- JOURNAL OF ORGANOMETALLIC CHEMISTRY, Bd. 430, 1992, Seiten 245-257, XP002001060 CANTY, A.J. ET AL.: "STRUCTURAL STUDIES OF COMPLEXES CONTAINING CYCLOPLATINATED TRIS(PYRAZOL-1-YL)METHANE"
- ANGEWANDTE CHEMIE, INTERNATIONAL EDITION ENGLISH, Bd. 34, Nr. 21, 1995, Seiten 2371-2374, XP002001061 HERRMANN, W.A. ET AL.: "METAL COMPLEXES OF N-HETEROCYCLIC CARBENES"
- CHEMICAL ABSTRACTS, Bd. 106, Columbus, Ohio, US; Zusammenfassung Nr. 148367C, DEMIDOV, V.N. ET AL.: 'thermal dehydrochlorination of cis-tetrachlorobis(pyridine)- and (2,2'-dipyridine)platinum(IV)'

## Beschreibung

Die Erfindung betrifft neue Komplexverbindungen von Elementen der Gruppen 8, 9 und 10 des Periodensystems der Elemente (entsprechend der IUPAC-Empfehlung von 1985). Gemeinsames Merkmal dieser Verbindungen ist, daß sie als Komplexligand heterocyclische Carbene und daneben gegebenfalls noch weitere Liganden, enthalten. Die Verbindungen sind in organischen Lösungsmitteln und/oder in Wasser ohne Zersetzung löslich.

Komplexverbindungen aus einem Übergangsmetall als Zentralatom und an dieses gebundene Steuerliganden haben in jüngster Zeit als Homogenkatalysatoren vielfache Anwendung gefunden. Ihre Bedeutung liegt insbesondere bei Reaktionen, die zum Aufbau von CC-, CH-, NC- und OC-Bindungen führen. Beispiele für technische Prozesse, die in Gegenwart derartiger Katalysatoren durchgeführt werden, sind die Hydrierung und die Hydroformylierung von CC-ungesättigten organischen Verbindungen, vorzugsweise von Olefinen. Als Steuerliganden, die, zumeist im Überschuß angewandt, gleichzeitig auch die Komplexverbindungen stabilisieren und neben dem Zentralatom maßgebend für die spezifische katalytische Wirksamkeit sind, finden bisher nahezu ausschließlich organische Amine, Phosphine oder Phosphite Anwendung. Die bekanntesten Beispiele sind Komplexverbindungen der allgemeinen Formel ClRhL₃, die als Hydrierkatalysator, und H(CO)RhL₃, die als Hydroformylierungskatalysator wirken, wobei L in beiden Fällen für Triphenylphosphin steht.

Organische Phosphine haben sich als Steuerliganden wegen ihrer stofflichen Vielfalt, ihrer katalytischen Wirksamkeit und ihrer Selektivität in der industriellen Praxis gut bewährt. Dennoch stehen ihrer verbreiteten Anwendung eine Reihe Nachteile entgegen. Unter ihnen ist insbesondere die Oxidationsempfindlichkeit zu nennen, die vor allem in Gegenwart von Metallen und Metall-Ionen auftritt. Daher müssen bei Verwendung von Katalysatoren auf Basis Phosphine enthaltender Komplexverbindungen Maßnahmen zum Ausschluß von Oxidationsmitteln, wie Sauerstoff oder Luft ergriffen werden, um die Verluste der häufig nur kostenaufwendig herzustellenden Liganden zu verringern. Eine weitere Eigenschaft, die allen organischen Phosphinen eigen ist und ihre Einsatzmöglichkeit begrenzt, ist die irreversible Spaltung von Phosphor-Kohlenstoff-Bindungen, die z.B. bei der Hydroformylierung oberhalb bestimmter, von der Art des Phosphins abhängiger Temperaturen verstärkt auftritt und zur Deaktivierung des Katalysators und damit die Wirtschaftlichkeit des Verfahrens beeinträchtigendem hohen Phosphinverbrauch führt. Schließlich erlauben die herkömmlichen Alkyl- und Arylphosphine ebensowenig wie die gleichfalls als Liganden eingesetzten organischen Phosphite der allgemeinen Formel P(OR)₃ (wobei R für Alkyl- oder Arylreste steht) den gesamten Bereich der elektronischen Steuerungsmöglichkeiten hinsichtlich der katalytisch aktiven Metallzentren abzudecken. Insbesondere fehlen stark nukleophile, d.h. elektronenreiche Liganden, die beständig gegen Oxidationsmittel sind und eine stabile Bindung mit dem Metall eingehen. Dafür wären grundsätzlich organische Amine geeignet, doch sind auch diese Liganden oxidationsempfindlich und für die genannten CH- und CC-Verknüpfungsreaktionen nicht einsetzbar.

Es bestand daher die Aufgabe, neue Metallkomplexverbindungen zu entwickeln, die die geschilderten Nachteile nicht aufweisen und überdies synthetisch leicht und kostengünstig zugänglich sind. Zudem soll die Konstitution der Steuerliganden auf einfache Weise verändert werden können, so daß es möglich ist, Metallkomplexe herzustellen, die individuelle katalytische Probleme lösen.

Die Erfindung besteht in neuen Komplexverbindungen der allgemeinen Formel

[LₐM_{b}X_{c}]ⁿ(A)ₙ (I)

in der M für Ionen der Oxidationsstufe 1 bis 8 von Metallen der 8., 9. und 10. Gruppe des Periodensystems der Elemente als Zentralatom steht, X an das Zentralatom gebundene ein- oder mehrzähnige geladene oder ungeladene Liganden bedeutet und L ebenfalls an das Zentralatom M als Liganden gebundene Monocarbene der allgemeinen Formeln 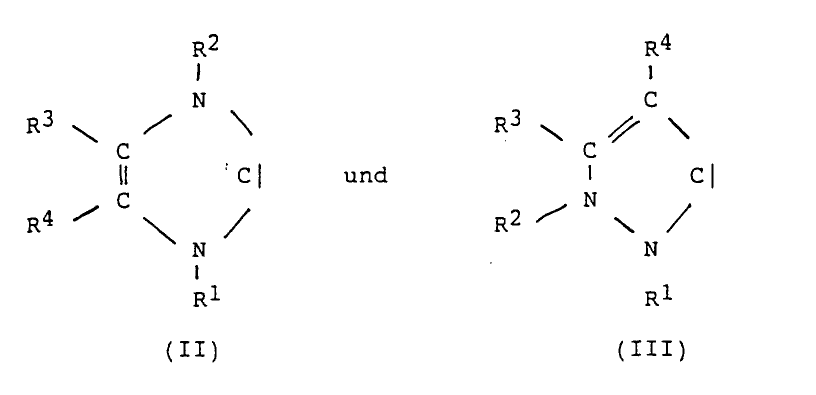 oder Dicarbene der allgemeinen Formeln 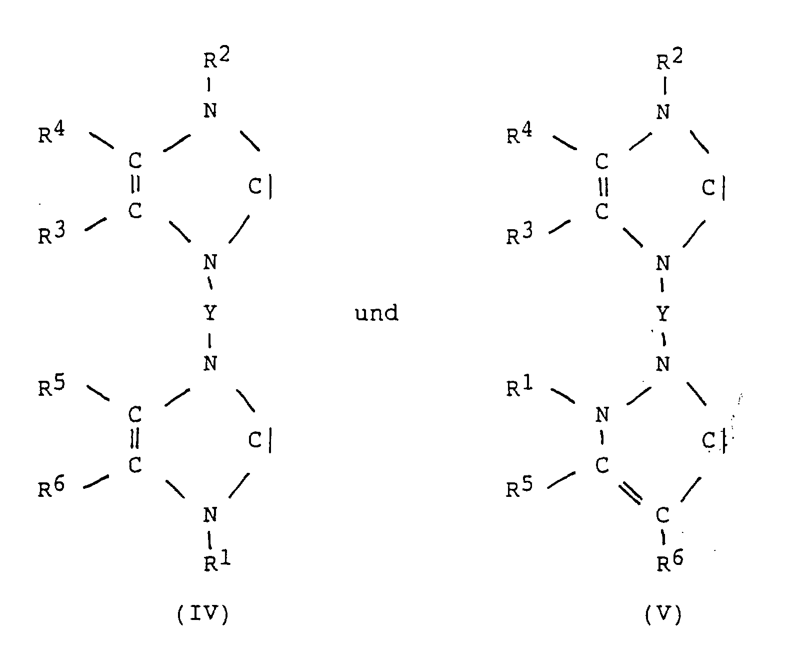 sind, wobei R¹, R², R³, R⁴, R⁵ und R⁶ gleiche oder verschiedene, geradkettige oder verzweigte, gegebenenfalls sulfonierte Alkylrest mit 1 bis 7 Kohlenstoffatomen, gegebenenfalls sulfonierte aliphatische mono- oder polycyclische Reste mit 5 bis 18 Kohlenstoffatomen, gegebenenfalls sulfonierte Alkenylgruppen mit 2 bis 5 Kohlenstoffatomen, gegebenenfalls sulfonierte Arylgruppen mit 6 bis 14 Kohlenstoffatomen oder gegebenenfalls sulfonierte Arylalkylreste mit 7 bis 19 Kohlenstoffatomen bedeuten, R³, R⁴, R⁵ und R⁶ auch für Wasserstoff stehen, R³ und R⁴ gemeinsam sowie R⁵ und R⁶ gemeinsam jeweils auch gleiche oder verschiedene anellierte und gegebenenfalls sulfonierte Reste mit 3 bis 7 Kohlenstoffatomen bedeuten, Y ein gesättigter oder ungesättigter, geradkettiger oder verzweigter Alkylidenrest mit 1 bis 4 Kohlenstoffatomen oder ein Dialkylsilylen- oder ein Tetraalkyldisilylenrest ist, A für ein einfach geladenes Anion oder das chemische Äquivalent eines mehrfach geladenen Anions steht, b eine ganze Zahl von 1 bis 3 darstellt, a einer ganzen Zahl von 1 bis 5 · b und c = 0 oder einer ganzen Zahl von 1 bis 4 · b entsprechen, n = 0 oder eine ganze Zahl von 1 bis 6 und c + n > 0 ist, ausgenommen die Verbindungen (N,N'-Dimethylbenzimidazolin-2-yliden)chloro(1,5-cycloocta-dien)rhodium und Tris-(N,N'-Dimethylbenzimidazolin-2-yliden)chlororhodium.

Gegebenenfalls können die Reste R¹, R², R³, R⁴, R⁵ und R⁶ gleiche oder verschiedene sulfonierte, substituierte, chirale und/oder polymerträgerfixierte Alkylreste mit 1 - 7 Kohlenstoffatomen darstellen.

Komplexverbindungen von Metallen der 8., 9. und 10. Gruppe des Periodensystems der Elemente, die als Liganden Carbene enthalten, die sich von Imidazol oder Pyrazol und deren Derivaten ableiten und in denen das Metall in der Oxidationsstufe +1 bis +8 vorliegt, sind mit Ausnahme der kürzlich beschriebenen Verbindungen (N,N'-Dimethylbenzimidazolin-2-yliden)chloro(1,5-cyclooctadien)rhodium und Tris-(N,N'-Dimethylbenzimidazolin-2-yliden)chlororhodium (vgl. J. Organometall. Chem. 481 (1994), 89 bis 95) nicht bekannt.

Die neuen Verbindungen sind in organischen Lösungsmitteln, aber auch in Wasser löslich, insbesondere wenn sie durch Sulfonatreste substituierte, aliphatische oder aromatische Reste enthalten. Sie zeichnen sich durch erhebliche Thermostabilität teilweise bis oberhalb 350°C, hohe Oxidationsstabilität und ausgeprägte katalytische Aktivität bei Reaktionen aus, die zum Aufbau von Kohlenstoff-Kohlenstoff-, Kohlenstoff-Wasserstoff-und Kohlenstoff-Silicium-Bindungen führen. Außerdem neigen die neuen Verbindungen im Gegensatz zu Phosphin- und Phosphit-Komplexverbindungen nicht zur Dissoziation, so daß ein Ligandenüberschuß zur Steuerung der Reaktivität und zur Stabilisierung nicht erforderlich ist. Dieses Verhalten der beanspruchten Carben-Metallkomplexe war nicht vorauszusehen, denn Komplexverbindungen, die Carben-Liganden enthalten, sind als Katalysatoren für die Olefin- und Alkin-Metathese bekannt, also eine Reaktion, bei der Kohlenstoff-Kohlenstoff-Mehrfachbindungen enthaltende Moleküle gespalten werden, und zwar unter entscheidender Beteiligung des Carben-Liganden.

Die neuen Komplexverbindungen leiten sich von den Metallen Eisen, Ruthenium, Osmium, Kobalt, Rhodium, Iridium, Nickel, Palladium und Platin ab. Ein- oder mehrzähnige Liganden, die neben den Carbenen in den Komplexverbindungen enthalten sein können und in der allgemeinen Formel (I) durch X wiedergegeben werden, sind Wasserstoff oder das Wasserstoff-Ion, Halogene oder Halogen-Ionen, Pseudohalogenide, Carboxylat-Ionen, Sulfonat-Ionen, Amidreste, Alkoholatreste, Acetylacetonatrest, Kohlenmonoxid, Alkylreste mit 1 bis 7 Kohlenstoffatomen, Stickstoffmonoxid, Nitrile, Isonitrile, Mono- oder Diolefine, Alkine und 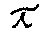 -Aromatenreste. Sind mehrere dieser Liganden im Komplexmolekül enthalten, dann können sie gleich oder verschieden sein.

In den vom Imidazol und vom Pyrazol oder deren Derivaten abgeleiteten Mono- bzw. Dicarbenen entsprechend den Formeln (II), (III), (IV) und (V) stehen R¹ bis R⁶ insbesondere für die Reste Methyl, Isopropyl, tert.-Butyl, Benzyl, Triphenylmethyl, Phenyl, Tolyl, Xylyl, Mesityl und Adamantyl, R¹ und R² sind bevorzugt der Methyl-, der tert.-Butyl-, der Phenyl-, der Benzyl- und der o-Tolylrest, R³ und R⁴ stehen vorzugsweise für Wasserstoff und die Methylgruppe.

Die Reste R³ und R⁴ und die Reste R⁵ und R⁶ können zusammen mit zwei benachbarten Kohlenstoffatomen des Imidazolringes oder der C-N-Gruppierung im Pyrazolring ein Ringsystem bilden. R³ und R⁴ bzw. R⁵ und R⁶ stehen dann bevorzugt für die Gruppierungen (CH)₄, sie führt zur Ausbildung eines anellierten aromatischen Sechsrings, (CH₂)₄ und (CH₂)₅.

Die durch Y bezeichneten Brückenglieder der Dicarbene gemäß den Formeln (IV) und (V) sind vorzugsweise die Methylen-, Dimethylmethylen-, Diphenylmethylen-, 1,3-Phenylen-und die Ethylidengruppe. Unter den Silizium enthaltenden Brückengliedern werden die Dimethylsilylen- und die Tetramethyldisilylengruppe bevorzugt. a ist vorzugsweise 1 oder 2, b vorzugsweise 1; n steht insbesondere für die Zahlen 0 bis 3.

A vertritt bevorzugt Halogenid-, Pseudohalogenid-, Tetraphenylborat-, Tetrafluoroborat-, Hexafluorophosphat- und Carboxylat-Ionen, unter den zuletzt genannten insbesondere das Acetat-Ion, ferner Metallkomplex-Anionen wie z.B. Tetracarbonyl-Cobaltat, Hexafluoroferrat(III), Tetrachloroferrat(III), Tetrachloroaluminat oder Tetrachloropalladat(II).

Die beanspruchten Verbindungen sind auf verschiedenen Wegen zugänglich. Eine Herstellungsvariante geht von einfachen Verbindungen, d.h. Salzen oder Metallkomplexen (wie den Acetylacetonaten, Metallcarbonylen) jenes Elements aus, das das Zentralatom der Komplexverbindung bildet. Nach einer anderen Variante erhält man die neuen Verbindungen aus Komplexverbindungen durch Ligandenaustausch oder durch Eliminierungs- und/oder Substitutionsreaktionen, zum Beispiel aus gängigen Solvenskomplexen dieser Metallverbindungen wie PdCl₂ (C₆H₅C=N)₂, NiBr₂ · 2DMF (DMF = Dimethylformamid) oder Cl₂Pt[(CH₃)₂NCH₂CH₂N(CH₃)₂]. Ferner entstehen die beanspruchten Verbindungen durch einfache Addition des Carbens an die jeweilige Metallkomponente, wobei diese Anlagerung auch unter Aufbrechen einer Brückenstruktur erfolgen kann.

Die Carbene werden entsprechend ihrer Beständigkeit entweder in freier Form als Lösung eingesetzt oder, häufiger, im Reaktionsgemisch aus Verbindungen hergestellt, die unter den Reaktionsbedingungen in Carbene überführt werden können. Die wichtigste Bildungsmethode ist die Deprotonierung von Imidazolium- oder Pyrazoliumsalzen, gegebenenfalls durch Zusatz von Basen wie Metallhydride, Carbonylmetallate, Metallcarboxylate, Metallalkoholate oder Metallamide.

Die Umsetzung der Ausgangsstoffe, d.h. der einfachen Salze bzw. der Komplexverbindungen mit den Carbenen und gegebenenfalls weiteren Liganden erfolgt durch Mischen der Reaktanten in einem Lösungsmittel bei Raumtemperatur oder erhöhter Temperatur. Die Reaktion verläuft mit hoher Geschwindigkeit und ist im wesentlichen oft nach wenigen Minuten beendet. Es empfiehlt sich jedoch zur Vervollständigung der Reaktion Umsetzungszeiten von bis zu mehreren Stunden einzuhalten, insbesondere wenn die Einsatzstoffe im verwendeten Medium nur teilweise gelöst sind, d.h. aus Suspension reagieren.

Zur Herstellung sulfonierte Liganden enthaltender Komplexverbindungen, die wasserlöslich sind, setzt man als Ausgangsstoffe zumindest einen Reaktionspartner ein, dessen Molekül oder Molekülfragment sulfoniert ist.

Zur Isolierung der neuen Komplexverbindungen aus dem Reaktionsmedium hat es sich bewährt, das Lösungsmittel zweckmäßig im Hochvakuum zu entfernen. Das Rohprodukt wird zur Reinigung gewaschen und aus einem geeigneten Lösungsmittel oder Lösungsmittelgemisch, das im Einzelfall durch Vorversuche zu ermitteln ist, umkristallisiert.

Nachstehend werden Herstellung und Eigenschaften der neuen Verbindungen beschrieben, die Erfindung ist jedoch nicht auf die angeführten Beispiele beschränkt:

### Beispiele

### Allgemeine Arbeitstechnik

Alle Reaktionen mit metallorganischen Verbindungen werden, sofern nicht anders angegeben, unter Ausschluß von Luftsauerstoff und Feuchtigkeit in standardisierten Glasapparaturen unter Inertgasatmosphäre durchgeführt (Schlenckrohrtechnik). Der als Inertgas verwendete Stickstoff wurde über Kupferoxidkatalysator, Silicagel und Molekularsieb (4 Å) gereinigt und getrocknet. Die eingesetzten Lösungsmittel wurden nach Standardmethoden getrocknet und über Molekularsieb (4 Å) aufbewahrt.

### 1) Chloro(η⁴-1,5-cyclooctadien)(1,3-dimethylimidazolin-2-yliden)rhodium(I)

### 1a) Darstellung von 1,3-Dimethylimidazolin-2-yliden

8,69 g (38,8 mmol) 1,3-Dimethylimidazolium-iodid werden mit 1,03 g (42,7 mmol) Natriumhydrid und 0,2 g (1,8 mmol) Kalium-tert-butylat in 50 ml Tetrahydrofuran (THF) gelöst und in einem Schlenckrohr mit angeschlossenem Paraffinölrückschlagventil 4 Stunden bei Raumtemperatur gerührt.

Die Lösung färbt sich durch das entstehende freie Carben gelb. Das Lösungsmittel wird im Hochvakuum abgezogen und der Rückstand in einer Mikrodestillationsapparatur unter Vakuum destilliert. Man erhält 1,3-Dimethylimidazolin-2-yliden in Form eines gelben Öls. Das Carben wird sofort in 60 ml THF gelöst und bei -30°C aufbewahrt.

### 1b) Darstellung von Chloro(η⁴-1,5-cyclooctadien)(1,3-dimethylimidazolin-2-yliden)rhodium(I)

247 mg (0,5 mmol) Di(µ-chloro)bis(η⁴-1,5-cyclooctadien)dirhodium werden bei Raumtemperatur in 20 ml absolutem THF aufgenommen und mit 192 mg (1 mmol) 1,3-Dimethylimidazolin-2-yliden versetzt. Der sofortige Umsatz ist an einer Farbveränderung von hellgelb nach sattgelb zu erkennen. Man rührt weitere 15 min bei Raumtemperatur, zieht das Lösungsmittel im Hochvakuum ab und reinigt den Rückstand durch Waschen mit 10 ml Diethylether. Das Produkt wird in 10 ml Methylenchlorid aufgenommen und mit 30 ml Pentan vorsichtig überschichtet. Die resultierenden gelben Kristalle werden durch Dekantieren vom Lösungsmittelgemisch befreit und im Hochvakuum getrocknet. Die Verbindung löst sich sehr gut in Chloroform und Methylenchlorid, gut in THF und Toluol, wenig in Diethylether und Pentan mit gelber Farbe. Auch nach mehrstündigem Erhitzen in feuchtem Toluol in einer Sauerstoffatmosphäre findet keine Zersetzung statt. Die Ausbeute beträgt 310 mg (91%).

### Charakterisierung

| Analyse (berechnet für C₁₃H₂₀ClN₂Rh) | | | |
|---|---|---|---|
| ber | C 45,57 | H 5,88 | N 8,17 |
| gef | C 45,63 | H 5,98 | N 8,35 |

¹H-NMR (400 MHz, CDCl₃, 20°C, ppm)
   6,8 (s, 2H) und 4,1 (s, 6H) Carben
   5,0 (2H); 3,3 (2H); 2,4 (4H); 1,9 (4H) Cyclooctadien

¹³C{¹H}-NMR
   182,6 d, Carben-Kohlenstoffatom ¹J(C-Rh) = 20 Hz
   121,9 und 37,6 Carben
   98,5; 67,7; 33,0; 28,9 Cyclooctadien

IR(KBr) ν in cm⁻¹
   3500, 3154, 3103, 2931, 2875, 2828, 1652, 1507, 1456, 1378, 1328, 1228, 1115, 1079, 992, 957, 865, 816, 744, 694, 459

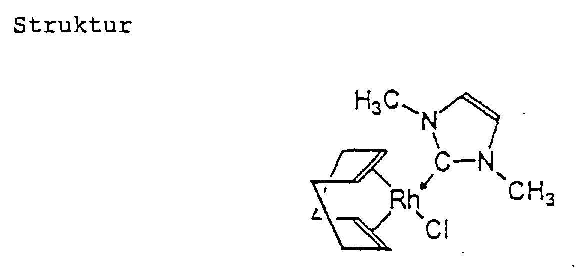

### 2) [(η⁴-1,5-Cyclooctadien)bis(1,3-dimethylimidazolin-2-yliden)rhodium(I)]-chlorid

247 mg (0,5 mmol) Di(µ-chloro)bis(η⁴-1,5-cyclooctadien)dirhodium werden bei Raumtemperatur in 20 ml absolutem THF aufgenommen und mit 279 mg (3 mmol) 1,3-Dimethylimidazolin-2-yliden versetzt. Der sofortige Umsatz ist an einer Farbveränderung von hellgelb nach sattgelb zu erkennen. Man rührt weitere 3 h bei Raumtemperatur, zieht das Lösungsmittel im Hochvakuum ab und reinigt den Rückstand durch Waschen mit 30 ml Diethylether. Das Produkt wird in 10 ml Methylenchlorid aufgenommen und mit 10 ml Pentan vorsichtig überschichtet. Die resultierenden gelben Kristalle werden durch Dekantieren vom Lösungsmittelgemisch befreit und im Hochvakuum getrocknet. Die Verbindung ist gut in Chloroform und Methylenchlorid, mäßig in THF, Wasser und Toluol, nicht in Diethylether und Pentan löslich. Die Ausbeute beträgt 410 mg (93 %).

### Charakterisierung

| Analyse (berechnet für C₁₈H₂₈ClN₄Rh) | | | |
|---|---|---|---|
| ber | C 49,27 | H 6,43 | N 12,77 |
| gef | C 50,26 | H 6,44 | N 12,66 |

¹H-NMR (400 MHz, CDCl₃, 20°C, ppm)
   7,0 (s, 4H) und 4,0 (s, 12H) Carben
   4,2 (m, 4H) 2,3 (4H) 2,1 (4H) Cyclooctadien (COD)

¹³C{¹H}-NMR
   180,5 (d, J(C-Rh) = 20 Hz)
   123,1; 38,3 Carben
   88,8 und 30,4 COD

IR(KBr) ν in cm⁻¹
   3450, 3154, 3094, 2920, 2977, 2828, 1634, 1574, 1458, 1380, 1230, 1115, 1084, 991, 823, 744, 695, 668, 461

Der Metallkomplex ist durch Einkristall-Röntgenstrukturanalyse charakterisiert.

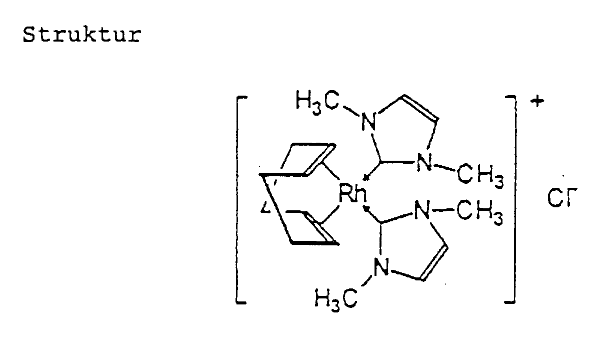

### 3) [1,2-Bis(3-methylimidazolin-2-yliden)ethylen]bis-[chloro-(η⁴-1,5-cyclooctadien)rhodium(I)]

### 3a) Darstellung des Liganden 1,2-Bis(3-methylimidazolin-2-yliden)ethylen

352 mg (1 mmol) 1,2-Bis(3-methylimidazoliumbromid)ethylen werden mit 224 mg (2 mmol) Kalium-tert.-butylat in 20 ml absolutem THF bei -20°C zusammengegeben. Dabei färbt sich die Reaktionslösung sofort gelb. Die das freie Dicarben enthaltende Reaktionslösung, wird in 3b) weiter umgesetzt.

### 3b) Darstellung von [1,2-Bis(3-methylimidazolin-2-yliden)ethylen]bis[chloro(η⁴-1,5-cyclooctadien)rhodium(I)]

247 mg (0,5 mmol) Di(µ-chloro)bis(η⁴-1,5-cyclooctadien)dirhodium werden bei Raumtemperatur in 20 ml absolutem THF aufgenommen und mit 190 mg (1 mmol) 1,2-Bis(3-methylimidazolin-2-yliden)ethylen (dargestellt nach 3a) versetzt. Der sofortige Umsatz ist an einem Farbumschlag von hellgelb nach sattgelb zu erkennen. Man rührt weitere 3 h bei Raumtemperatur, zieht das Lösungsmittel im Hochvakuum ab und reinigt den Rückstand durch Waschen mit 10 ml Diethylether. Das Produkt wird in 10 ml Methylenchlorid aufgenommen und mit 20 ml Pentan vorsichtig überschichtet. Die resultierenden gelben Kristalle werden durch Dekantieren vom Lösungsmittelgemisch befreit und im Hochvakuum getrocknet. Die hellgelben Kristalle sind gut in Chloroform und Methylenchlorid löslich. Die Ausbeute beträgt 80 mg (18 %).

### Charakterisierung

¹H-NMR (400 MHz, CDCl₃, 20°C, ppm)
   6,85 (d, 2H, J = 1,9 Hz); 6,47 (d, 2H, J = = 1,9 Hz) (Imidazol)
   4,01 (s, 6H) (N-Methyl)
   4,73 (m, 4H) (CH₂-CH₂)
   3,34 (m, 4H), 3,22 (m, 4H), 2,44 (m, 4H), 2,00 (m, 4H) (COD)
   5,17 (m, 4H), 4,98 (m, 4H) (olefinische COD-Protonen)

¹³C{¹H}-NMR
   181,30 (d, ¹J(C-Rh) = 50,5 Hz) (Carben-C-Atom)
   123,85; 120,62 (Imidazol)
   37,76 (N-Methyl)
   50,85 (CH₂-CH₂)
   69,18 (d, ¹J(C-Rh) = 14,6 Hz), 67,75 (d, ¹J (C-Rh) = 14,5 Hz) (olefinischen C-Atome COD)
   29,45 28,39 (COD)

Der Metallkomplex ist durch Einkristall-Röntgenstrukturanalyse charakterisiert.

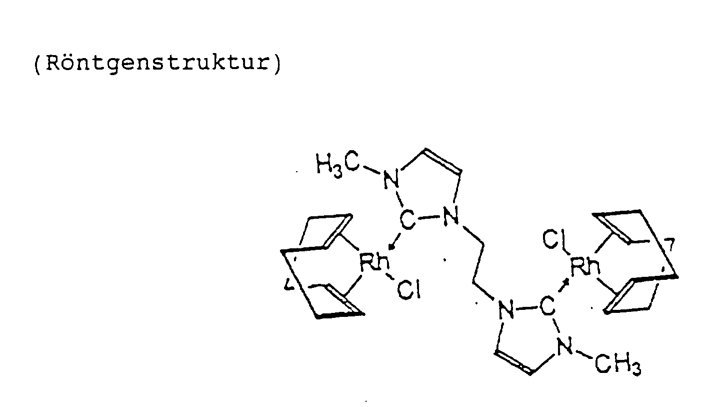

### 4) Dicarbonylchloro(1,3-dimethylimidazolin-2-yliden)-rhodium(I)

200 mg (0,58 mmol) Chloro(η⁴-1,5-cyclooctadien)(1,3-dimethylimidazolin-2-yliden)rhodium(I) werden in 30 ml absolutem Methylenchlorid gelöst und die Lösung wird anschließend 10 Minuten mit Kohlenmonoxid begast. Nach Aufklarung rührt man weitere 15 min bei Raumtemperatur, zieht das Lösungsmittel im Hochvakuum ab und reinigt den Rückstand durch Waschen mit 10 ml Diethylether. Das Produkt wird in 10 ml Methylenchlorid aufgenommen und mit 30 ml Pentan vorsichtig überschichtet. Die resultierenden hellgelben Kristalle werden durch Dekantieren vom Lösungsmittelgemisch befreit und im Hochvakuum getrocknet. Die Verbindung löst sich sehr gut in Chloroform und Methylenchlorid, gut in THF und Toluol, wenig in Diethylether und Pentan mit gelber Farbe. Die Ausbeute beträgt 160 mg (95 %).

### Charakterisierung

| Analyse (berechnet für C₇H₈ClN₂O₂Rh) | | | |
|---|---|---|---|
| ber | C 28,94 | H 2,78 | N 9,64 |
| gef | C 29,18 | H 2,86 | N 9,56 |

¹H-NMR (400 MHz, CDCl₃, 20 °C, ppm)
   3,87 (s, 6H, NCH₃), 6,93 (s, 2H, NCH).

¹³C{¹H}-NMR (CDCl₃, 100,1 MHz, 20 °C)
   38,27 (NCH₃), 122,75 (NCH), 185,30 (d, ¹J(CRh) = 53 Hz, C-Carben).

IR (KBr [cm⁻¹])
   2076 (s, ν(CO)), 2006 (sst, ν(CO)).

MS (chemische Ionisation): m/z
   290 (Molpeak, korrektes Isotopenmuster)
   262 (M - CO, korrektes Isotopenmuster)
   234 (262 - CO, korrektes Isotopenmuster)
   199 (234 - Cl)

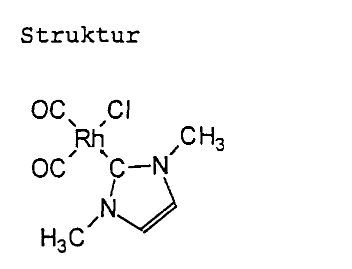

### 5) [(η⁴-1,5-Cyclooctadien)bis(1,3-dimethylimidazolin-2-yliden)rhodium(I)]-acetat

150 mg (0,277 mmol) Di(µ-acetato)bis(η⁴-1,5-cyclooctadien)dirhodium(I) werden bei Raumtemperatur in 10 ml absolutem THF aufgenommen und mit 1,2 mmol 1,3-Dimethylimidazolin-2-yliden versetzt. Dabei fällt aus der ursprünglich gelben Lösung sofort ein gelber Niederschlag aus. Man rührt weitere 10 min bei Raumtemperatur, zieht das Lösungsmittel im Hochvakuum ab und reinigt den Rückstand durch Waschen mit jeweils 30 ml Diethylether und Pentan. Das Produkt kann aus Methylenchlorid durch vorsichtiges Überschichten mit Pentan umkristallisiert werden. Die Ausbeute beträgt 101 mg (79 %).

### Charakterisierung

¹H-NMR (400 MHz, CDCl₃, 20 °C)
   6,96 (s, 4H, olefinische Carben-CH), 4,07 (m, 4H, olefinische COD-CH), 3,85 (s, 12H, N-Me), 2,28 (m, 8H, COD-CH₂), 2,03 (s, 3H, Ac)

¹³C{¹H}-NMR (CDCl₃, 100,1 MHz, 20 °C)
   180,3 (d, ¹J(C-Rh) = 50,0 Hz, Carben-C), 176,5 (s, CH₃COO), 123,1 (s, olefinische Carben-CH), 88,7 (s, olefinische COD-CH), 38,8 (s, N-CH₃), 30,5 (s, COD-CH₂), 24,6 (s, CH₃-COO)

IR (KBr [cm⁻¹])
   3500, 3100, 2923, ν(CH); 2859, 2823, 1580, ν(CC), 1530, 1423, ν(CO), 1460, 1378, δ(CH₃), 1310, 1223, δ(N-Me), 1082, 1023, 956, 864, 743, 693, δ(CH-olefinisch)

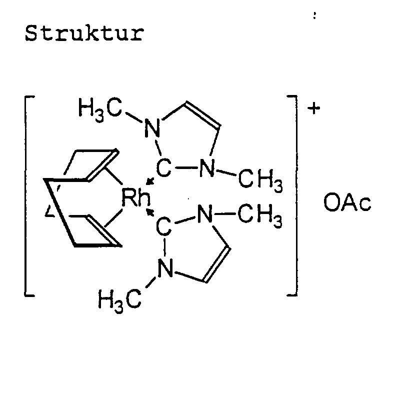

### 6) Chloro(η⁴-1,5-cyclooctadien)(1,3-dicyclohexylimidazolin-2-yliden)rhodium(I)

250 mg (0,51 mmol) Di(µ-chloro)bis(η⁴-1,5-cyclooctadien)dirhodium werden in 20 ml THF gelöst und unter Rühren bei Raumtemperatur mit 1 mmol 1,3-Dicyclohexylimidazolin-2-yliden in THF versetzt. Anschließend wird das Lösungsmittel im Hochvakuum entfernt und der verbleibende Rückstand mit je 10 ml Pentan und Diethylether gewaschen. Die Ausbeute beträgt 410 mg (85 %).

### Charakterisierung

¹H-NMR (400 MHz, CDCl₃, 20 °C)
   6,78 (s, 2H, NCH), 4,94 (s, 2H, COD), 3,23 (s, 2H, COD), 4,17 (br, 2H, Cyclohexyl), 2,4 - 1,2 (m, 28H, Cyclohexyl, COD)

¹³C{¹H}-NMR (CDCl₃, 100,1 MHz, 20 °C)
   179,7 (d, ¹J(C-Rh) = 50,0 Hz, Carben-C), 117 (s, NCH), 97,4 (d, ¹J(C-Rh) = 8 Hz, olefinische COD-CH), 67,2 (d, ¹J(C-Rh) = 6 Hz, olefinische COD-CH), 60,0 (s, Cyclohexyl-C), 34, 4 (s, Cyclohexyl-C), 33,6 (s, COD), 29,5 (s, COD), 24,1 (s, Cyclohexyl-C), 25,2 (s, Cyclohexyl-C)

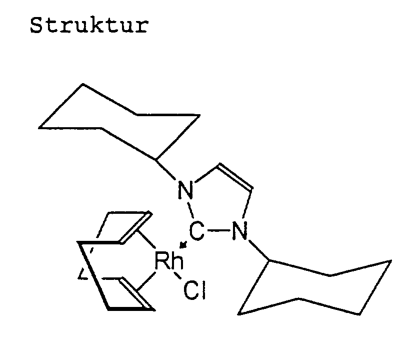

### 7) Dichloro(1,3-dimethylimidazolin-2-yliden)[η⁶-(1-isopropyl)(4-methyl)benzol]ruthenium(II)

306 mg (0,5 mmol) Bis[(µ-chloro)chloro{η⁶-(1-isopropyl)(4-methyl)benzol}ruthenium(II)] werden in 15 ml THF gelöst und bei Raumtemperatur mit 96 mg (1 mmol) (dargestellt nach 1a) 1,3-Dimethylimidazolin-2-yliden in 5 ml absolutem THF versetzt. Eine Farbvertiefung von schwach hellrot nach tiefrot zeigt sofortigen Umsatz an. Nach weiteren 15 min Rühren wird das Lösungsmittel im Hochvakuum abgezogen. Der verbleibende Rückstand wird mit je 2 mal 10 ml Ether und Pentan gewaschen. Das Produkt wird in 10 ml Methylenchlorid aufgenommen und mit 20 ml Pentan vorsichtig überschichtet. Dabei resultieren tiefrote Kristalle, die durch Dekantieren vom Lösungsmittelgemisch befreit und im Hochvakuum getrocknet werden. Die Verbindung ist sehr gut in Chloroform und Methylenchlorid, gut in Toluol und THF löslich. Die Ausbeute beträgt 360 mg (90 %).

### Charakterisierung

¹H-NMR (400 MHz, CDCl₃, 20°C, ppm)
   6,97 (s, 2H) und 3,96 (s, 6H) (Carben)
   5,36 (d, ³J = 5,9 Hz, 2H); 5,10 (d, ³J = 5,9 Hz, 2H); 2,04 (s, 3H, Methyl), 1,21 (d, ³J = 6,9 Hz, 6H, Methyl), 2,88 (Septett, ³J = 6,9 Hz, 1H) (Aromat)

¹³C{¹H}-NMR (ppm)
   123,71; 39,56 und 173,17 Carben
   84,71; 82,80; 30,78; 22,46; 18,62 Aromat, dazu zwei weitere Peaks im Aromatenbereich (quartäre C)

MS (chemische Ionisation): m/z
   400 (Molpeak, korrektes Isotopenmuster)
   266 (M - C₁₀H₁₄)
   231 (266 - Cl)
   196 (231 - Cl)
   134 (C₁₀H₁₄)
   119 (134 -CH₃)
   43 (Propyl)

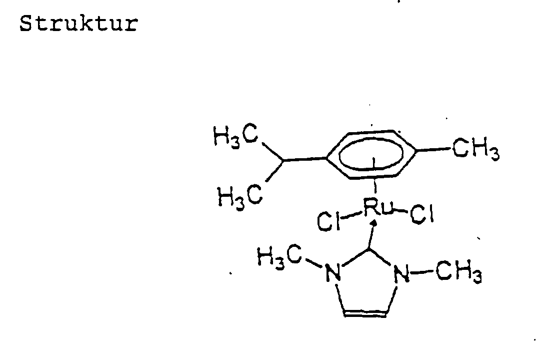

### 8) Dichlorobis[1-methyl-3-(ethyl-2-sulfonsäure-Natriumsalz)imidazolin-2-yliden]platin(II)

### 8a) Darstellung der Ligandenvorstufe 1-Methyl-3-(ethyl-2-sulfonsäure-Natriumsalz)imidazoliumbromid

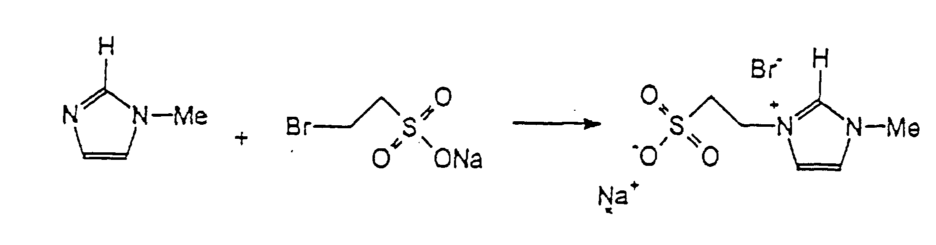

205 mg (2,5 mmol) Methylimidazol werden in Substanz mit 210 mg (1 mmol) 2-Bromethansulfonsäure-Natriumsalz drei Tage bei 70°C gerührt. Nach dem Abkühlen wird der Rückstand zum Entfernen von überschüssigem Methylimidazol dreimal mit 30 ml Diethylether gewaschen. Nach Trocknung im Hochvakuum (70°C, 10 Stunden) verbleibt ein weißer Feststoff, der sehr gut in Wasser, kaum in organischen Solventien (wie THF, Toluol, Pentan) löslich ist. Die Ausbeute beträgt 280 mg (96 %).

### Charakterisierung

| Analyse (berechnet für C₆H₁₀BrN₂NaO₃S) | | | | |
|---|---|---|---|---|
| ber | C 25,06 | H 3,86 | N 10,09 | S 10,33 |
| gef | C 24,69 | H 3,40 | N 9,60 | S 10,90 |

¹H-NMR (400 MHz, D₂O, 20°C, ppm)
   9,40 (s, 1H); 8,17 (d, 1H); 8,05 (d, 1H) (Imidazol)
   4,51 (s, 3H) (N-Methyl)
   5,22 (t, 2H, ³J = 6,2 Hz); 4,05 (t, 2H, ³J = 6,2 Hz (CH₂-CH₂)

¹³C{¹H}-NMR
   136,65; 123,55; 122,28; 35,66 Carben
   49,78; 44,98 (CH₂-CH₂)

IR (cm⁻¹, KBr)
   3156, 3108, 2964, 2927, 2851, 1638(s)
   1576, 1566, 1525, 1458, 1421, 1385, 1370, 1341(w), 1279(sh), 1206 (sst,br, SO), 1176 (sst), 1046, 744, 663, 620, 619, 575, 527.

### 8b) Darstellung von Dichlorobis[1-methyl-3-(ethyl-2-sulfonsäure-Natriumsalz)imidazolin-2-yliden]platin(II)

526 mg (2 mmol) 1-Methyl-3-(ethyl-2-sulfonsäure-Natriumsalz)imidazoliumbromid werden mit 415 mg (1 mmol) Kaliumtetrachloroplatinat(II) in 20 ml entgastem Wasser 24 h bei Raumtemperatur gerührt. Dabei klart die Lösung von dunkelrot nach gelb-orange auf. Das Lösungsmittel wird unter reduziertem Druck abdestilliert und der resultierende Rückstand im Hochvakuum 5 h auf 215°C erhitzt, wobei Chlorwasserstoff abgespalten wird. Das Rohprodukt wird in entgastem Wasser aufgenommen und über Sephadex-Gel G 15 säulenchromatographiert. Die orangegelbe Verbindung wird ohne weitere Reinigung eingesetzt.

### 9) Dichlorobis[1-(ethyl-2-sulfonsäure-Natriumsalz)-3-(ethyl-2-sulfonsäure-Kaliumsalz)imidazolin-2-yliden]-platin(II)

### 9a) Darstellung der Ligandenvorstufe 1-(Ethyl-2-sulfonsäure-Natriumsalz)-3-(ethyl-2-sulfonat)imidazoliumbetain

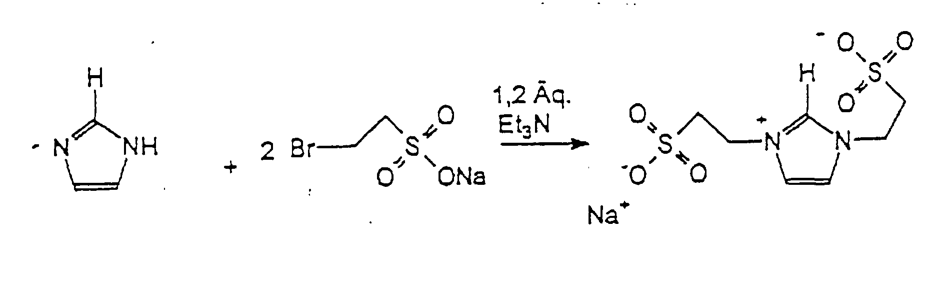

557 mg (8,2 mmol) Imidazol, gelöst in 20 ml Dimethylacetamid, werden mit 1,5 ml (10,25 mmol) Triethylamin und 3,45 g (16,3 mmol) 2-Bromethansulfonsäure-natriumsalz versetzt. Beim Erwärmen auf 120°C klart die ursprüngliche Suspension auf. Nach weiterem Erhitzen auf 160°C beginnt ein weißer Niederschlag auszufallen. Um vollständigen Umsatz zu erzielen, erhitzt man 4 h unter Rückfluß. Nach Abkühlen der Lösung auf Raumtemperatur wird der weiße Niederschlag abfiltriert und 2 mal mit je 20 ml Ethanol und Ether gewaschen.

### Charakterisierung:

| Analyse (berechnet für C₇H₁₁N₂Na₁O₆S₂) | | | | |
|---|---|---|---|---|
| ber | C 27,40 | H 3,62 | N 9,14 | S 20,94 |
| gef | C 26,85 | H 3,67 | N 8,82 | S 20,31 |

¹H-NMR (400 MHz, D₂O, 20°C, ppm)
   9,18 (s, 1H), 7,55 (s, 2H); (Imidazol)
   4,58 (t, 4H, ³J = 6,5 Hz); 3,40 (t, 4H, ³J = 6,5 Hz); (2 mal CH₂-CH₂)

¹³C{¹H}-NMR
   136,76; 122,59; Carben
   49,77; 45,15; (CH₂-CH₂)

IR (cm⁻¹, KBr)
   3152, 3104, 2992, 2978, 2954, 2930, 2851, 2677, 1641, 1564, 1459, 1410, 1367(m)
   1226-1197, (sst, br, u SO), 1177 (sst), 1059 (sst), 1046 (sst) 900, 836, 746 (s), 641, 618, 590, 528

### 9b) Darstellung von Dichlorobis[1-(ethyl-2-sulfonsäure-Natriumsalz)-3-(ethyl-2-sulfonsäure-Kaliumsalz)imidazolin-2-yliden]platin(II).

612 mg (2 mmol) 1-(Ethyl-2-sulfonsäure-Natriumsalz)-3-(ethyl-2-sulfonat)imidazoliumbetain werden mit 415 mg (1 mmol) Kaliumtetrachloroplatinat(II) in 20 ml entgastem Wasser versetzt und 24 h bei Raumtemperatur gerührt. Dabei klart die Lösung von dunkelrot nach grüngelb auf. Das Lösungsmittel wird unter reduziertem Druck abdestilliert und der resultierende Rückstand im Hochvakuum 5 h auf 204°C erhitzt, wobei Chlorwasserstoff freigesetzt wird. Das Rohprodukt wird in entgastem Wasser aufgenommen und über Sephadex-Gel G 15 säulenchromatographiert. Die hellgelbe Verbindung wird ohne weitere Reinigung eingesetzt.

### 10) Dichlorobis[1-methyl-3-(butyl-4-sulfonsäure-Kaliumsalz)imidazolin-2-yliden]platin(II)

### 10a) Darstellung der Ligandenvorstufe 1-Methyl-3-(butyl-4-sulfonat)imidazoliumbetain

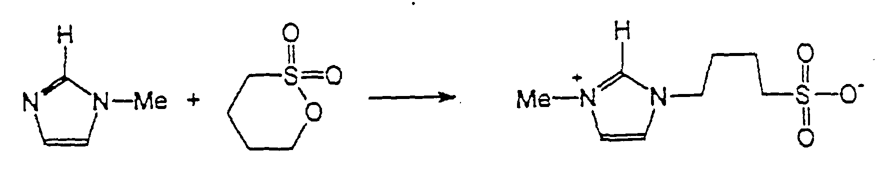

821 mg (10 mmol) Methylimidazol werden in Substanz mit 1361 mg (10 mmol) 1,4-Butansulton bei Raumtemperatur 3 Tage gerührt. Nach Festwerden der Substanz wäscht man dreimal mit je 20 ml Toluol und trocknet im Hochvakuum. Der weiße Feststoff löst sich gut in Wasser, weniger gut in organischen Solventien.Die Ausbeute beträgt 2100 mg (96 %).

### Charakterisierung

| Analyse (berechnet für C₈H₁₄N₂O₃S) | | | |
|---|---|---|---|
| ber | C 44,02 | H 6,47 | N 12,83 |
| gef | C 43,97 | H 6,33 | N 12,87 |

¹H-NMR (400 MHz, D₂O, 20°C, ppm)
   8,65 (s, 1H); 7,41 (d, 1H, ³J = 2,00 Hz); 7,34 (d, 1H, ³J = 2,00 Hz) (Imidazol)
   3,62 (s, 3H) (N-Methyl)
   4,15 (m, 2H); 2,85 (m, 2H); 1,96 (m, 2H); 1,67 (m, 2H) (CH₂-CH₂-CH₂-CH₂)

¹³C{¹H}-NMR
   138,19; 123,61; 122,1 (Imidazol)
   35,75 (N-Methyl)
   50,28; 48,88; 36,48; 28,23; (CH₂-CH₂-CH₂-CH₂)

### 10b) Darstellung von Dichlorobis[1-methyl-3-(butyl-4-sulfonsäure-Kaliumsalz)imidazolin-2-yliden]platin(II)

376 mg (2 mmol) 1-Methyl-3-(butyl-4-sulfonat)imidazoliumbetain werden mit 415 mg (1 mmol) Kaliumtetrachloroplatinat(II) versetzt und 24 h bei Raumtemperatur gerührt. Dabei ändert sich die Farbe der Lösung von tiefrot nach gelb. Das Lösungsmittel wird unter reduziertem Druck abdestilliert und der resultierende Rückstnd im Hochvakuum 5 h auf 195°C erhitzt, wobei Chlorwasserstoff freigesetzt wird. Das Rohprodukt wird in entgastem Wasser aufgenommen und über Sephadex-Gel G15 säulenchromatographiert. Die gelbe Verbindung wird ohne weitere Reinigung eingesetzt.

### 11) Diiodo-bis(1,3-dimethylimidazolin-2-yliden)palladium(II):

200 mg (0,89 mmol) Palladium(II)-acetat werden in 25 ml absolutem THF bei Raumtemperatur mit 2,1 Moläquivalent (420 mg, 1,87 mmol) 1,3-Dimethylimidazoliumiodid versetzt. Nach 30 min Erhitzen unter Rückfluß klart die vormals dunkelbraune Lösung nach gelb auf. Das Lösungsmittel wird im Hochvakuum abgezogen und der verbliebene Rückstand dreimal mit 20 ml absolutem Diethylether gewaschen. Nach Umkristallisieren aus 5 ml Methylenchlorid und 3 ml n-Hexan erhält man 370 mg der Komplexverbindung als gelben kristallinen Feststoff (Ausbeute: 75 %).

### Charakterisierung

| Analyse (ber. für C₁₀H₁₆N₄I₂Pd): | | | |
|---|---|---|---|
| ber | C 21,73 | H 2,92 | N 10,14 |
| gef | C 23,26 | H 3,45 | N 10,00 |
| (Kristallisiert mit CH₂Cl₂) | | | |

Zersetzungspunkt: 299°C
¹H-NMR (400 MHz, CDCl₃, 20°C, ppm):
   δ H = 3,92 (s, 12H; N-Methyl), 7,24 (s, 4H; Imidazol).

¹³C-NMR (100,53 MHz, CDCl₃, 20°C, ppm):
   δ C = 168,18 (Carben-C), 122,32 (Imidazol), 38,22 (N-Methyl).

Die cis-ständige Konfiguration des Komplexes konnte anhand der Einkristall-Röntgenstrukturanalyse eindeutig belegt werden.

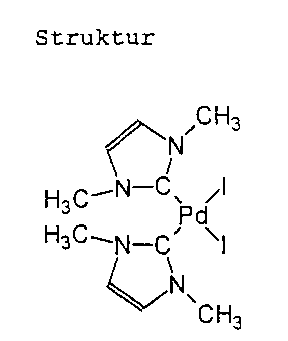

### 12) Diiodo(1,1'-methylen-3,3'-dimethyldiimidazolin-2,2'-diyliden)palladium(II)

### Variante A

200 mg (0,89 mmol) Palladium(II)-acetat werden in 10 ml absolutem Toluol bei 25°C mit 400 mg (0,89 mmol) 1,1'-Methylen-3,3'-dimethyldiimidazolium-diiodid versetzt. Nach 2 h Erhitzen unter Rückfluß wird die von dunkelrot nach gelb aufgeklarte Lösung mit Hilfe einer Kanüle filtriert. Das Lösungsmittel wird im Hochvakuum abgezogen. Der Rückstand wird dreimal mit 10 ml absolutem Diethylether und 20 ml absolutem THF gewaschen. Man erhält die Verbindung als gelben Feststoff (Ausbeute: 290 mg = 61 %).

### Charakterisierung

| Analyse (ber. für C₉H₁₂N₄I₂Pd): | | | | |
|---|---|---|---|---|
| ber | C 20,15 | H 2,25 | N 10,44 | I 47,31 |
| gef | C 22,53 | H 2,78 | N 11,42 | I 47,6 |
| (Kristallisiert mit THF) | | | | |

¹H-NMR (400 MHz, CDCl₃, 20°C, ppm)
   δ H = 3,92 (s, 6H; N-Methyl); 6,61 (s, 2H, CH₂); 7,41 und 7,43 (s, 4H; Imidazol).
¹³C-NMR (100,53 MHz, CDCl₃, 20°C, ppm)
   δ C = 36,31 (N-Methyl); 53,60 (CH₂); 121,87 und 124,35 (Imidazol); 185,50 (Carben-C).

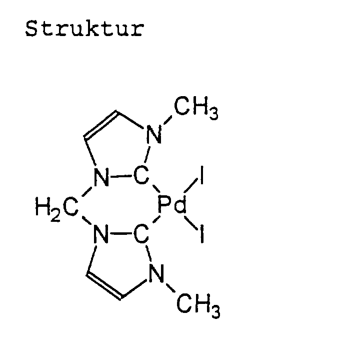

### Variante B

1,26 g (4,5 mmol) Palladium(II)-diiodid werden gemeinsam mit 4,80 g 1,1'-Methylen-3,3'-dimethyldiimidazolium-diiodid in 100 ml n-Hexan suspendiert. Die feinteilige Suspension wird auf Trockeneistemperatur abgekühlt und unter Rühren tropfenweise mit 25 mmol n-Butyllithium als Lösung in n-Hexan versetzt. (Die Lösung von n-Butyllithium soll nicht konzentrierter als ca. 1 molar sein.) Nach 2 h Rühren bei Trockeneistemperatur wird auf Raumtemperatur erwärmt. Mittlerweise hat sich ein nahezu schwarzer Niederschlag gebildet, den man durch Abtrennen der überstehenden Lösung mittels Kanüle isoliert. Er wird dann mit Methanol in mehreren Portionen extrahiert. Die vereinigten Extrakte, welche die Verbindung enthalten, werden mit verdünnter Salzsäure neutralisiert. Nach Entfernung aller flüchtigen Anteile im Vakuum einer Ölpumpe wird ein nahezu farbloser Rückstand erhalten. Der Rückstand wird aus wäßrigem Methanol umkristallisiert und man erhält dabei 0,62 g farbloser Kristalle, die sich bei 215 bis 216°C unter Braun- bzw. Schwarzfärbung zersetzen.

Nach derselben Arbeitsvorschrfit erhält man das Tetrafluoroborat (A = BF₄), wenn man von 1,1'-Methylen-3,3'-dimethyldiimidazolium-bistetrafluoroborat ausgeht.

### 13) Bis(1,3-dimethylimidazolin-2-yliden)-palladium(II)-diacetat

50 mg (0,22 mmol) Palladium(II)-acetat werden in 20 ml absolutem Toluol mit 0,44 mmol 1,3-Dimethylimidazolin-2-yliden (erhalten durch vorangehende in situ-Bildung aus 1,3-Dimethylimidazolium-iodid mittels Kalium-tert.-butylat und Natriumhydrid in absolutem THF) in 7,5 ml absolutem THF bei Raumtemperatur umgesetzt. Der resultierende gelbe Niederschlag wird nach dreimal Waschen und Umkristallisieren aus 3 ml absolutem Methylenchlorid und 2 ml absolutem n-Hexan im Hochvakuum getrocknet.

### 14) Dichlorobis(1,3-dimethylimidazolin-2-yliden)palladium(II)

190 mg (0.5 mmol) Bis(benzonitril)dichloropalladium(II) werden in 15 ml Toluol gelöst und mit 1 mmol freiem 1,3-Dimethylimidazolin-2-yliden, gelöst in THF, versetzt. Sofort bei Zugabe des freien Carbens färbt sich die Lösung heller, mit fortschreitender Reaktion bildet sich ein Niederschlag. Das Lösungsmittel wird im Hochvakuum abgezogen und der entstehende rosa Feststoff mehrmals mit 10 ml Diethylether und 10 ml Pentan gewaschen. Die Ausbeute beträgt 148 mg (80 %).

### Charakterisierung

Im ¹H- und ¹³C-NMR ist sowohl die cis-, als auch die trans-Konfiguration etwa im Verhältnis 1:1 erkennbar.
¹H-NMR (400 MHz, CD₃NO₂, 20 °C, ppm)
   7,11, 7,02 (s, jeweils 2H, CH=CH), 4,07, 3,71 (s, jeweils 6H, N-CH₃)

¹³C{¹H}-NMR (100,1 MHz, CD₃NO₂, 20 °C. ppm)
   172,8, 171,4 (Carben-C), 126,4, 125,6 (C=C), 40,4, 39,8 (N-CH₃)

IR (KBr, cm⁻¹)
   1683, 1652 und 1635 (ν C=C), 1466 und 1397 (δ CH₃), 1230 (δ N-CH), 744 und 686 (γ CH=CH)

### 15) Dichloro-bis(1,3-diisopropylimidazolin-2-yliden)platin(II)

3,48 g (10 mmol) cis-Bis(acetonitril)platin(II)-chlorid in 100 ml Acetonitril werden mit der doppeltmolaren Menge 1,3-Diisopropylimidazolin-2-yliden in THF-Lösung bei Raumtemperatur versetzt und 10 h bei 40°C gerührt. Anschließend zieht man die flüchtigen Anteile im Vakuum einer Ölpumpe ab, wäscht den farblosen, in den üblichen organischen Solventien unlöslichen Rückstand mehrfach mit Diethylether und trocknet ihn zuletzt im Hochvakuum. Der Rückstand ist bis oberhalb 200°C thermisch vollkommen beständig und entspricht aufgrund der elementaranalytischen Charakterisierung sowie der NMR-Spektren der Verbindung Dichloro-bis(1,3-diisopropylimidazolin-2-yliden)platin-(II). Dieselbe Verbindung erhält man, wenn Platin(II)-chlorid zunächst mit 100 ml Acetonitril oder Benzonitril behandelt und dann wiederum mit der doppeltmolaren Menge des Carbens umgesetzt wird.

### 16) Chloro(η⁴-1,5-cyclooctadien)(1,3-dimethylimidazolin-2-yliden)iridium(I)

282 mg (0,5 mmol) Di(µ-chloro)bis(η⁴-1,5-cyclooctadien)diiridium werden bei Raumtemperatur in 20 ml absolutem THF aufgenommen und mit 192 mg (1 mmol) 1,3-Dimethylimidazolin-2-yliden versetzt. Der sofortige Umsatz ist an einer Farbveränderung von gelb nach orange zu erkennen. Man rührt weitere 30 min bei Raumtemperatur, zieht das Lösungsmittel im Hochvakuum ab und reinigt den Rückstand durch Waschen mit 10 ml Diethylether. Das Produkt wird in 10 ml Methylenchlorid aufgenommen und mit 30 ml Pentan vorsichtig überschichtet. Die resultierenden gelben Kristalle werden durch Dekantieren vom Lösungsmittelgemisch befreit und im Hochvakuum getrocknet. Die Verbindung löst sich sehr gut in Chloroform und Methylenchlorid, gut in THF und Toluol, wenig in Diethylether und Pentan mit gelber Farbe. Die Ausbeute beträgt 389 mg (90%).

### Charakterisierung

¹H-NMR (400 MHz, CDCl₃, 20°C, ppm)
   6,79 (s, 2H); 3,67 (s, 6H) (Imidazol)
   5,23 (m, 2H); 4,2 (m, 2H); 1,50 (m, 4H); 1,89 (m, 4H)

¹³C{¹H}-NMR
   37,77; 122,83; 176,62 (Imidazol)
   59,24; 83,64; 31,68; 31,06 (COD)

IR (KBr, cm⁻¹)
   3500, 3158, 3104, v(CH), 2919, 2876, 2828, 1652, 1575, ν (CC), 1456, 1386, δ(CH₃), 1324, 1229, δ(N-Me), 1115, 1081, 997, 872, 803, 745, 700, δ (CH olefinisch), 466.

MS (chemische Ionisation): m/z
   432 (Molpeak, korrektes Isotopenmuster)
   397 (M - Cl, korrektes Isotopenmuster)

### 17) Tricarbonyldichloro(1,3-dimethylimidazolin-2-yliden)-osmium(II)

Zu einer gut gerührten Lösung von 345 mg (0,5 mmol) Bis[(µ-chloro)chlorotricarbonylosmium(II)] in 15 mL wasserfreiem THF wird portionsweise 1 mmol 1,3-Dimethylimidazolin-2-yliden, gelöst in 5 mL wasserfreiem THF, getropft. Nach Abziehen der flüchtigen Bestandteile im Hochvakuum wird der verbleibende Rückstand mit Ether (2 x 20 mL) und Pentan (2 x 20 mL) gewaschen und im Hochhvakuum getrocknet. Das Produkt ist selbst in Methylenchlorid praktisch nicht löslich. Für eine Röntgenstrukturanalyse geeignete Kristalle wurden durch langsames verdampfen des Lösungsmittels Nitromethan aus einer möglichst konzentrierten Lösung bei Raumtemperatur an Laboratmosphäre erhalten. Die Ausbeute beträgt 418 mg (95 %).

### Charakterisierung

¹H-NMR (400 MHz, CD₃NO₂, 20 °C, ppm): δ = 7,23 (s, 2H), 4,14 (s, 6H) (Carben);
   ¹³C{¹H}-NMR (100,1 MHz, CD₃NO₂ 20 °C. ppm): δ = 171,54 (Carben-C), 168,94, 168,49 (CO), 125,70 (NCH); 40,30 (NCH3);
IR (KBr, cm⁻¹): 2115 (s, ν(CO)), 2014 (ss, v(CO)), 1932 (s, ν(CO)).
MS (chemische Ionisation): m/z
   442 (Molpeak, korrektes Isotopenmuster)
   407 (M - Cl, korrektes Isotopenmuster)
   379 (407 - CO, korrektes Isotopenmuster)

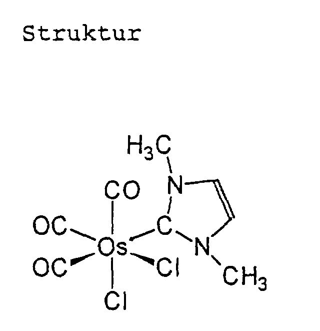

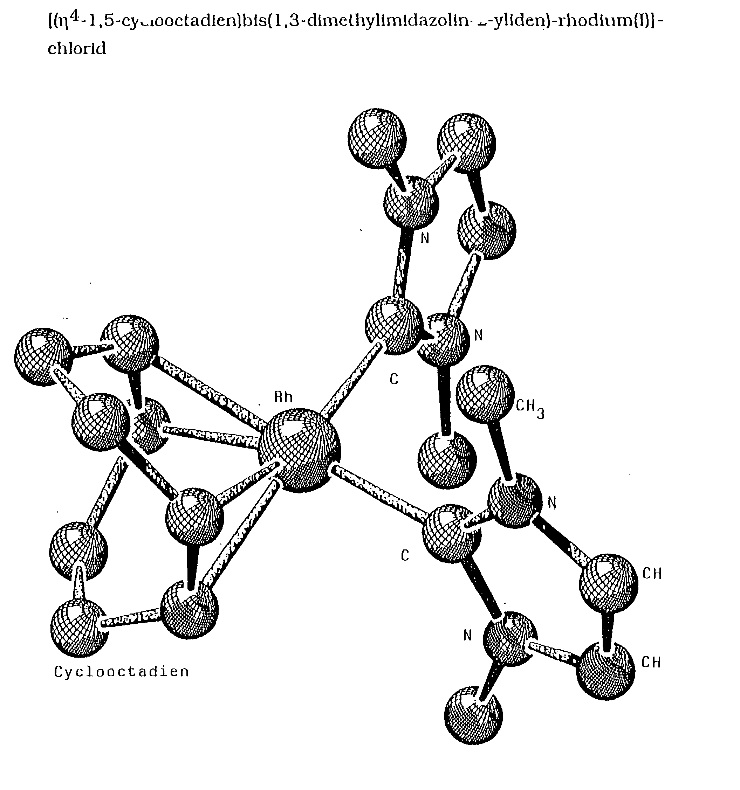

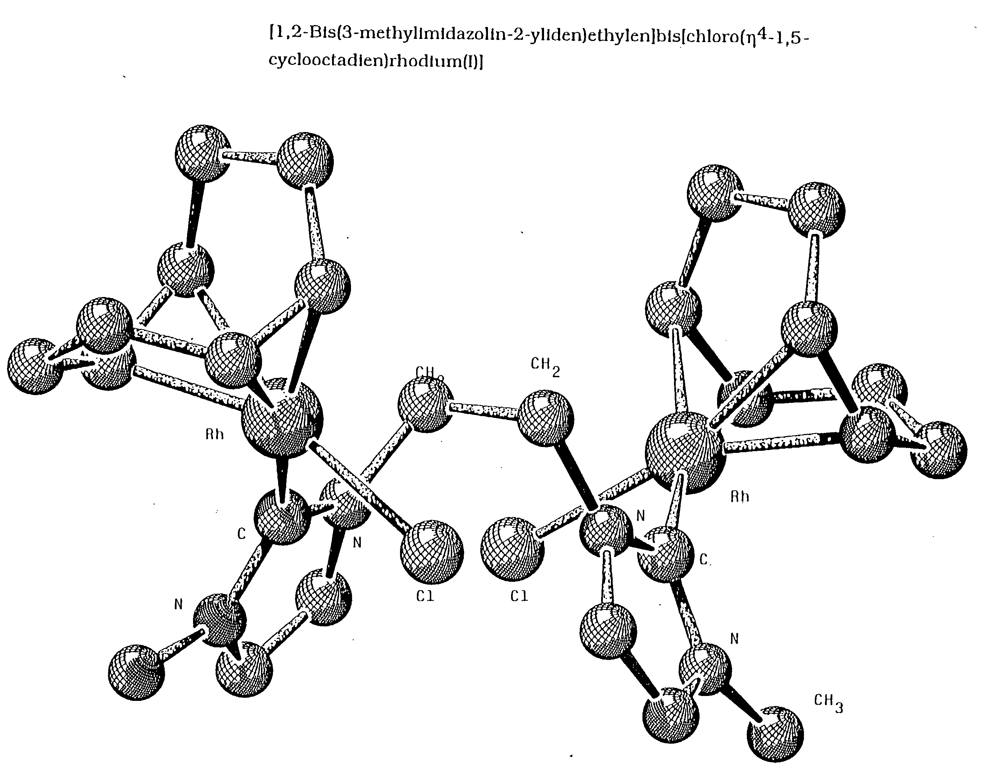

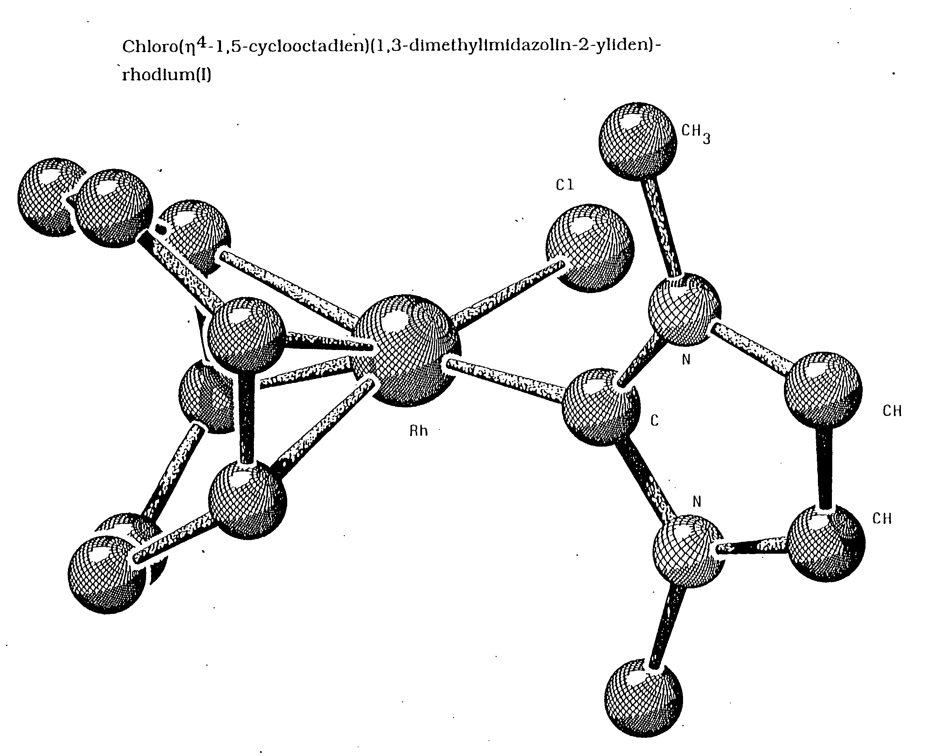

## Patentansprüche

1. Komplexverbindungen der allgemeinen Formel
[LₐM_{b}X_{c}]ⁿ(A)ₙ (I)
in der M für Ionen der Oxidationsstufe 1 bis 8 von Metallen der 8., 9. und 10. Gruppe des Periodensystems der Elemente als Zentralatom steht, X an das Zentralatom gebundene ein-oder mehrzähnige geladene oder ungeladene Liganden bedeutet und L ebenfalls an das Zentralatom M als Liganden gebundene Monocarbene der allgemeinen Formeln 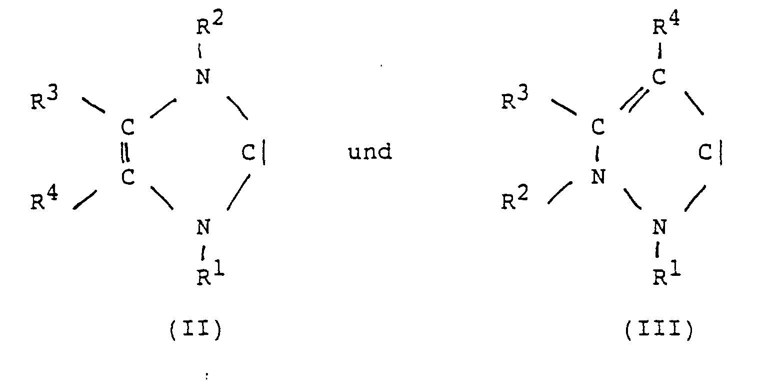 oder Dicarbene der allgemeinen Formeln 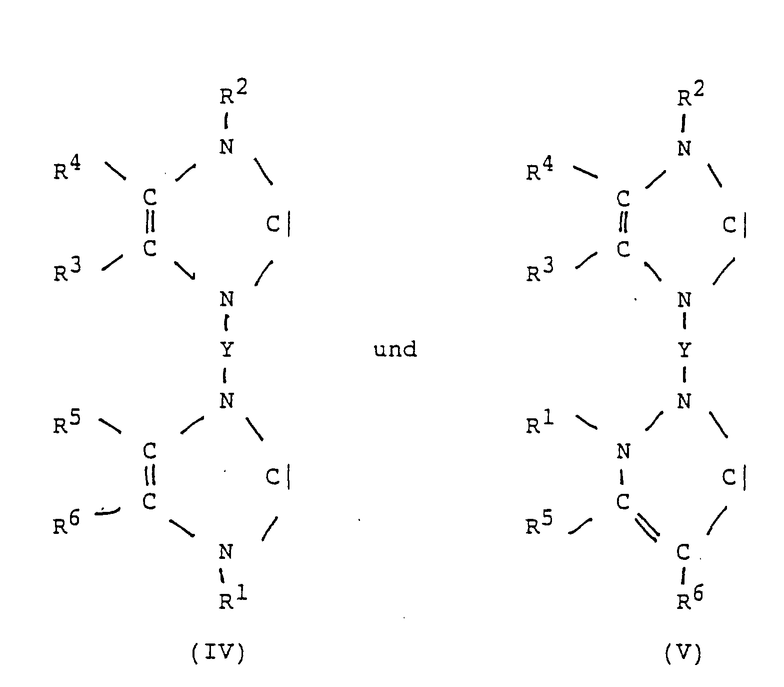 sind, wobei R¹, R², R³, R⁴, R⁵ und R⁶ gleiche oder verschiedene, geradkettige oder verzweigte, gegebenenfalls sulfonierte Alkylrest mit 1 bis 7 Kohlenstoffatomen, gegebenenfalls sulfonierte aliphatische mono- oder polycyclische Reste mit 5 bis 18 Kohlenstoffatomen, gegebenenfalls sulfonierte Alkenylgruppen mit 2 bis 5 Kohlenstoffatomen, gegebenenfalls sulfonierte Arylgruppen mit 6 bis 14 Kohlenstoffatomen oder gegebenenfalls sulfonierte Arylalkylreste mit 7 bis 19 Kohlenstoffatomen bedeuten, R³, R⁴, R⁵ und R⁶ auch für Wasserstoff stehen, R³ und R⁴ gemeinsam sowie R⁵ und R⁶ gemeinsam jeweils auch gleiche oder verschiedene anellierte und gegebenenfalls sulfonierte Reste mit 3 bis 7 Kohlenstoffatomen bedeuten, Y ein gesättigter oder ungesättigter, geradkettiger oder verzweigter Alkylidenrest mit 1 bis 4 Kohlenstoffatomen oder ein Dialkylsilylen- oder ein Tetraalkyldisilylenrest ist, A für ein einfach geladenes Anion oder das chemische Äquivalent eines mehrfach geladenen Anions steht, b eine ganze Zahl von 1 bis 3 darstellt, a einer ganzen Zahl von 1 bis 5 b und c = 0 oder einer ganzen Zahl von 1 bis 4 · b entsprechen, n = 0 oder eine ganze Zahl von 1 bis 6 und c + n > 0 ist, ausgenommen die Verbindungen (N,N'-Dimethylbenzimidazolin-2-yliden)chloro(1,5-cyclooctadien)rhodium und Tris-(N,N'-Dimethylbenzimidazolin-2-yliden) chlororhodium.

2. Komplexverbindungen nach Anspruch 1 **dadurch gekennzeichnet, daß** X in der allgemeinen Formel (I) für Wasserstoff, das Wasserstoff-Ion, Halogene, Halogen-Ionen, Pseudohalogenide, Carboxylat-Ionen, Sulfonat-Ionen, Amidreste, Alkylreste mit 1 bis 7 Kohlenstoffatomen, Alkoholatreste, den Acetylacetonatrest, Kohlenmonoxid, Stickstoffmonoxid, Nitrile, Isonitrile, Mono- oder Diolefine, Alkine und π-Aromatenrestesteht.

3. Komplexverbindungen nach Anspruch 1 oder 2 **dadurch gekennzeichnet, daß** in den allgemeinen Formeln (II), (III), (IV) und (V) R¹, R², R³, R⁴, R⁵, R⁶ für die Reste Methyl, Isopropyl, tert.-Butyl, Benzyl, Triphenylmethyl, Phenyl, Tolyl, Xylyl und Mesityl stehen.

4. Komplexverbindungen nach einem oder mehreren der Ansprüche 1 bis 3 **dadurch gekennzeichnet, daß** in den allgemeinen Formeln (II), (III) (IV) und (V) R¹ und R² gleich oder verschieden sind und für den Methyl-, den tert.-Butyl-, den Phenyl, den Benzyl- und o-Tolylrest steht.

5. Komplexverbindungen nach einem oder mehreren der Ansprüche 1 bis 4 **dadurch gekennzeichnet, daß** in den allgemeinen Formeln (II), (III), (IV) und (V) R³ und R⁴ für Wasserstoff und den Methylrest stehen.

6. Komplexverbindungen nach einem oder mehreren der Ansprüche 1 bis 5 **dadurch gekennzeichnet, daß** in den allgemeinen Formeln (II), (III), (IV) und (V) R³ und R⁴ gemeinsam und R⁵ und R⁶ gemeinsam für die Gruppierungen (CH)₄, (CH₂)₄, (CH₂)₅ stehen.

7. Komplexverbindungen nach einem oder mehreren der Ansprüche 1 bis 6 **dadurch gekennzeichnet, daß** in den allgemeinen Formeln (IV) und (V) Y für die Methylen-, die Dimethylmethylen-, die Diphenylmethylen- und die Ethylidengruppe steht.

8. Komplexverbindungen nach einem oder mehreren der Ansprüche 1 bis 6 **dadurch gekennzeichnet, daß** in den allgemeinen Formeln (IV) und (V) Y für die Dimethylsilylen- und die Tetramethyldisilylengruppe steht.

9. Komplexverbindungen nach einem oder mehreren der Ansprüche 1 bis 8 **dadurch gekennzeichnet, daß** in der allgemeinen Formel (I) a 1 oder 2 ist.

10. Komplexverbindungen nach einem oder mehreren der Ansprüche 1 bis 9 **dadurch gekennzeichnet, daß** in der allgemeinen Formel (I) b 1 ist.

11. Komplexverbindungen nach einem oder mehreren der Ansprüche 1 bis 10 **dadurch gekennzeichnet, daß** in der allgemeinen Formel (I) n 0 bis 3 ist.

12. Komplexverbindungen nach einem oder mehreren der Ansprüche 1 bis 11 **dadurch gekennzeichnet, daß** in der allgemeinen Formel (I) A für Halogenid- und Pseudohalogenid-Ionen, das Tetraphenylborat-, das Tetrafluoroborat-, das Hexafluorophosphat-, das Acetat-, das Tetracarbonylcobaltat-, das Hexafluoroferrat-, das Tetrachloroferrat-, das Tetrachloroaluminat-und das Tetrachloropalladat-Ion steht.

## Claims

1. Complexes of the general formula
[LₐM_{b}X_{c}]ⁿ(A)ₙ (I)
where M represents ions of oxidation state 1 to 8 of metals of groups 8, 9 and 10 of the periodic table as central atom, X denotes uni- or multidentate charged or uncharged ligands bound to the central atom, and L signifies ligands, similarly bound to the central atom M, comprising monocarbenes of the general formulae 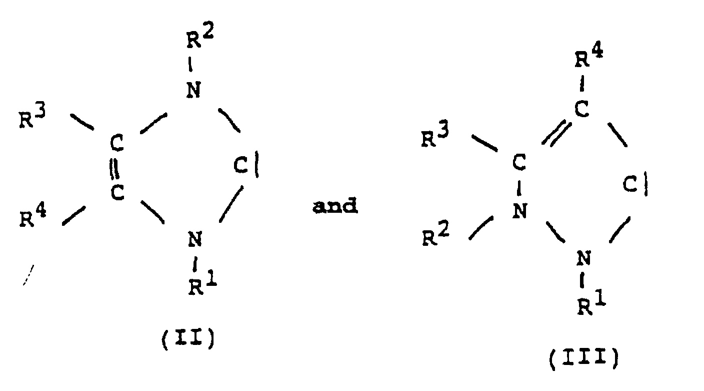 or dicarbenes of the general formulae 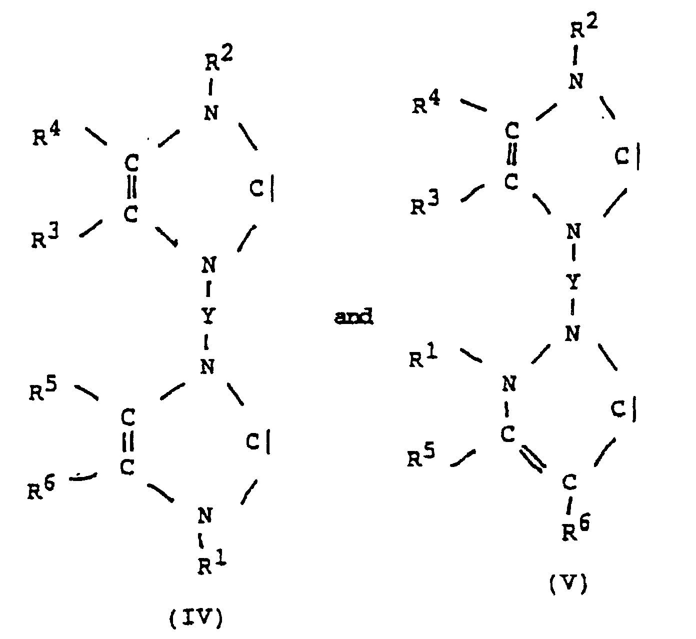 where R¹, R², R³, R⁴, R⁵ and R⁶ are identical or different, straight-chain or branched, optionally sulfonated alkyl radicals having 1 to 7 carbon atoms, optionally sulfonated aliphatic mono- or polycyclic radicals having 5 to 18 carbon atoms, optionally sulfonated alkenyl groups having 2 to 5 carbon atoms, optionally sulfonated aryl groups having 6 to 14 carbon atoms or optionally sulfonated arylalkyl radicals having 7 to 19 carbon atoms, R³, R⁴, R⁵ and R⁶ also represent hydrogen, R³ and R⁴ together and also R⁵ and R⁶ together in each case also denote identical or different fused and optionally sulfonated radicals having 3 to 7 carbon atoms, Y is a saturated or unsaturated, straight-chain or branched alkylidene radical having 1 to 4 carbon atoms or a dialkylsilylene or a tetraalkyldisilylene radical, A is a singly charged anion or the chemical equivalent of a multiply charged anion, b is an integer from 1 to 3, a is an integer from 1 to 5 × b and c = 0 or an integer from 1 to 4 × b, n = 0 or an integer from 1 to 6, and c + n > 0, but not (N,N'-dimethylbenzimidazolin-2-ylidene)chloro-(1,5-cyclooctadiene)rhodium and Tris-(N,N'-dimethylbe imidazolin-2-ylidene)chloro rhodium.

2. Complexes as claimed in claim 1, wherein X in the general formula (I) represents hydrogen, the hydrogen ion, halogens, halogen ions, pseudohalides, carboxylate ions, sulfonate ions, amide radicals, alkyl radicals having 1 to 7 carbon atoms, alcoholate radicals, the acetylacetonate radical, carbon monoxide, nitrogen monoxide, nitriles, isonitrilas, mono- or diolefins, alkynes and π-aromatic radicals.

3. Complexes as claimed in claim 1 or 2, wherein, in the general formulae (II), (III), (IV) and (V), R¹, R², R³, R⁴, R⁵ and R⁶ are each methyl, isopropyl, tert-butyl, benzyl, triphenylmethyl, phenyl, tolyl, xylyl or mesityl.

4. Complexes as claimed in one or more of claims 1 to 3, wherein, in the general formulae (II), (III), (IV) and (V), R¹ and R² are identical or different and each is methyl, tert-butyl, phenyl, benzyl or o-tolyl.

5. Complexes as claimed in one or more of claims 1 to 4, wherein, in the general formulas (II), (III), (IV) and (V), R³ and R⁴ are each hydrogen or methyl.

6. Complexes as claimed in one or more of claims 1 to 5, wherein, in the general formulae (II), (III), (IV) and (V), R³ and R⁴ together and R⁵ and R⁶ together represent the groupings (CH)₄, (CH₂)₄, (CH₂)₅.

7. Complexes as claimed in one or more of claims 1 to 6, wherein, in the general formulae (IV) and (V), Y is methylene, dimethylmethylene, diphenylmethylene or ethylidene.

8. Complexes as claimed in one or more of claims 1 to 6, wherein, in the general formulae (IV) and (V), Y is dimethylsilylene or tetramethyldisilylene.

9. Complexes as claimed in one or more of claims 1 to 8, wherein, in the general formula (I), a is 1 or 2.

10. Complexes as claimed in one or more of claims 1 to 9, wherein, in the general formula (I), b is 1.

11. Complexes as claimed in one or more of claims 1 to 10, wherein, in the general formula (I), n is from 0 to 3.

12. Complexes as claimed in one or more of claims 1 to 11, wherein, in the general formula (I), A represents the halide and pseudohalide ions, the tetraphenylborate, the tetrafluoroborate, the hexafluorophosphate, the acetate, the tetracarbonylcobaltate, the hexafluoroferrate, the tetrachloroferrate, the tetrachloroaluminate and the tetrachloropalladate ion.

## Revendications

1. Composés complexes de formule générale
[LₐM_{b}X_{c}]ⁿ(A)ₙ (I)
dans laquelle M représente en tant qu'atome central un ion au degré d'oxydation 1 à 8 d'un métal du 8ème, 9ème et 10ème groupe du système périodique des éléments, X représente un ligand chargé ou non chargé, mono- ou polycoordiné, lié à l'atome central, et L représente un monocarbène de formule générale 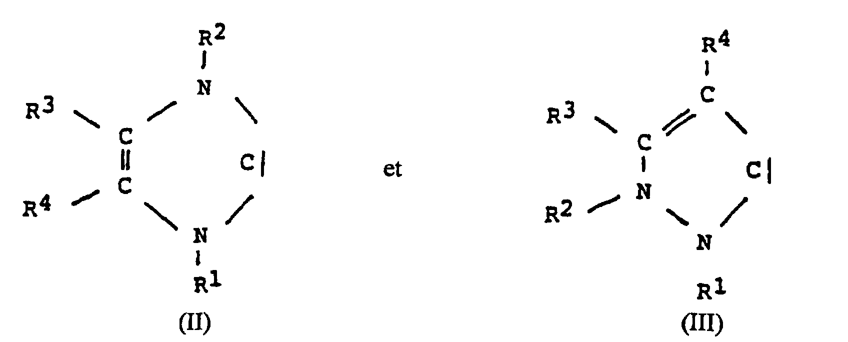 ou un dicarbène de formule générale 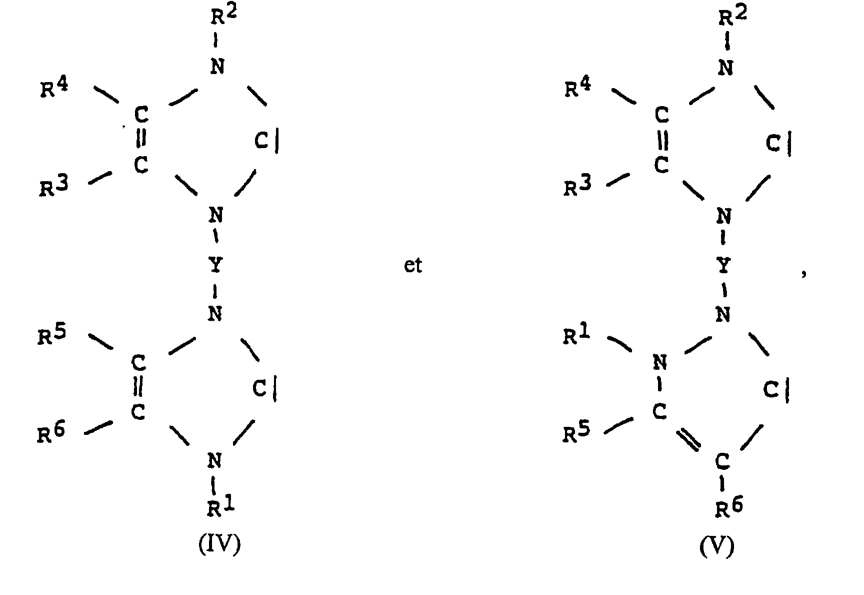 également lié en tant que ligand à l'atome central M,
où R¹, R², R³, R⁴, R⁵ et R⁶ représentent des restes alkyle de 1 à 7 atomes de carbone identiques ou différents, linéaires ou ramifiés, éventuellement sulfonés, des restes mono- ou polycycliques aliphatiques de 5 à 18 atomes de carbone éventuellement sulfonés, des groupes alcényle de 2 à 5 atomes de carbone éventuellement sulfonés, des groupes aryle de 6 à 14 atomes de carbone éventuellement sulfonés ou des restes arylalkyle de 7 à 19 atomes de carbone éventuellement sulfonés, R³, R⁴, R⁵ et R⁶ peuvent aussi représenter des atomes d'hydrogène, R³ et R⁴ ensemble, ainsi que R⁵ et R⁶ ensemble peuvent aussi former des restes condensés identiques ou différents et éventuellement sulfonés de 3 à 7 atomes de carbone, Y représente un reste alkylidène saturé ou insaturé, linéaire ou ramifié, de 1 à 4 atomes de carbone ou un reste dialkylsilylène ou tétraalkyldisilylène, A représente un anion à une seule charge ou l'équivalent chimique d'un anion à plusieurs charges, b est un nombre entier de 1 à 3, a est un nombre entier de 1 à 5 · b, et c = 0 ou un nombre entier de 1 à 4 · b, n est égal à 0 ou à un nombre entier de 1 à 6, et c + n > 0, à l'exception des composés (N,N'-dimethylbenzimidazolin-2-ylidène)chloro(1,5-cyclooctadiène)rhodium et tris(N,N'-diméthylbenzimidazolin-2-ylidène)chlororhodium.

2. Composés complexes selon la revendication 1, **caractérisés en ce que** X, dans la formule générale (I), représente un atome d'hydrogène, un ion hydrogène, des halogènes, des ions halogène, des pseudohalogénures, des ions carboxylate, des ions sulfonate, des restes amide, des restes alkyle de 1 à 7 atomes de carbone, des restes alkylate, le reste acétylacétonate, le monoxyde de carbone, le monoxyde d'azote, des nitriles, des isonitriles, des mono- ou dioléfines, des alcynes et des restes aromatiques π.

3. Composés complexes selon la revendication 1 ou 2, **caractérisés en ce que**, dans les formules générales (II), (III), (IV) et (V), R¹, R², R³, R⁴; R⁵ et R⁶ représentent les restes méthyle, isopropyle, tert-butyle, benzyle, triphénylméthyle, phényle, tolyle, xylyle et mésityle.

4. Composés complexes selon l'une ou plusieurs des revendications 1 à 3, **caractérisés en ce que**, dans les formules générales (II), (III), (IV) et (V), R¹ et R² sont identiques ou différents et représentent un reste méthyle, tert-butyle, phényle, benzyle ou o-tolyle.

5. Composés complexes selon l'une ou plusieurs des revendications 1 à 4, **caractérisés en ce que**, dans les formules générales (II), (III), (IV) et (V), R³ et R⁴ représentent l'hydrogène et le reste méthyle.

6. Composés complexes selon l'une ou plusieurs des revendications 1 à 5, **caractérisés en ce que**, dans les formules générales (II), (III), (IV) et (V), R³ et R⁴ ensemble et R⁵ et R⁶ ensemble représentent les groupes (CH)₄, (CH₂)₄, (CH₂)₅.

7. Composés complexes selon l'une ou plusieurs des revendications 1 à 6, **caractérisés en ce que**, dans les formules générales (IV) et (V), Y représente un groupe méthylène, diméthylméthylène, diphénylméthylène ou éthylidène.

8. Composés complexes selon l'une ou plusieurs des revendications 1 à 6, **caractérisés en ce que**, dans les formules générales (IV) et (V), Y représente un groupe diméthylsilylène ou tétraméthyldisilylène.

9. Composés complexes selon l'une ou plusieurs des revendications 1 à 8, **caractérisés en ce que**, dans la formule générale (I), a est 1 ou 2.

10. Composés complexes selon l'une ou plusieurs des revendications 1à 9, **caractérisés en ce que**, dans la formule générale (I), b est égal à 1.

11. Composés complexes selon l'une ou plusieurs des revendications 1 à 10, **caractérisés en ce que**, dans la formule générale (I), n est un nombre de 0 à 3.

12. Composés complexes selon l'une ou plusieurs des revendications 1 à 11, **caractérisés en ce que**, dans la formule générale (I), A est un ion halogénure ou pseudohalogénure, ou l'ion tétraphénylborate, tétrafluoroborate, hexafluorophosphate, acétate, tétracarbonylcobaltate, hexafluoroferrate, tétrachloroferrate, tétrachloroaluminate ou tétrachloropalladate.
